Europäisches Patentamt

European Patent Office

Office européen des brevets

(19)

(11) Publication number: **0 404 021**
**A2**

(12) **EUROPEAN PATENT APPLICATION**

(21) Application number: **90111474.4**

(22) Date of filing: **18.06.90**

(51) Int. Cl.⁵: **B32B 17/10, C03C 27/12**

(30) Priority: **19.06.89 JP 71407/89 U**
**07.08.89 JP 204245/89**

(43) Date of publication of application:
**27.12.90 Bulletin 90/52**

(84) Designated Contracting States:
**DE FR GB**

(71) Applicant: **KASHIWARA MACHINE
MANUFACTURING CO. LTD.**
**1-22, Kawahara-cho**
**Kashiwara-shi Osaka(JP)**

Applicant: **TSUTSUNAKA PLASTIC INDUSTRY
CO., LTD.**
**5-11, Doshi-machi, 3-chome Chuo-ku
Osaka(JP)**

(72) Inventor: **Mishima, Noboru, c/o Kashiwara
Machine MFG. Co.**
**1-22, Kawahara-cho, Kashiwara
Osaka 582(JP)**

(74) Representative: **Wächtershäuser, Günter, Dr.**
**Tal 29**
**D-8000 München 2(DE)**

(54) **Composite plate used as windowpane for permitting indoor reception of via-satellite broadcasting therethrough.**

(57) The present invention relates to a composite plate used as a windowpane for permitting indoor reception of via-satellite broadcasting therethrough, characterized in that it is formed by laminating a plurality of transparent plates.

EP 0 404 021 A2

**Composite Plate Used as Windowpane for Permitting Indoor Reception of via-Satellite Broadcasting Therethrough**

Detailed Description of the Invention:

(Technical field)

The present invention relates to a transparent composite plate used as a windowpane to be set in a window, for permission of indoor reception of via-satellite broadcasting therethrough.

(Prior art)

Of rate, via-satellite broadcasting has become popular and in several countries, commercial broadcasting has already been started. The SHF wave which is being employed for the via-satellite broadcasting is more prone to go straight on than the VHF or UHF wave which is used for ground broadcasting and the BS antenna for receiving it is generally installed outdoors, directly directed to the broadcasting satellite. However, there is strong demand for installing the antenna indoors as in the case of ground broadcasting.

When the BS antenna is installed indoors, reception of via-satellite broadcasting seems impossible, unless at least a window is utilized. Even if a window is utilized, if the window is closed with glass, the SHF wave is attenuated by the windowpane; as a consequence, clear image can not be obtained. However, even when the via-satellite broadcasting is received through a windowpane, if the thickness of the windowpane is on the order of 5 mm, the transmission loss due to the windowpane is reportedly notably small.

(Problem to be solved by this invention)

A windowpane having a thickness around 5 mm is for special uses and is not used in general dwelling houses. It is very high-priced, as compared with the windowpane having thicknesses of 2-3 mm which are used in general houses, and can, therefore, not be readily employed.

The present invention, conceived with such a situation in mind, has as its object providing a low-cost window material the use of which as a windowpane permits clear image to be obtained even in the state of the window being closed.

(Means to solve the problem)

The window mateial provided by this invention is a composite plate formed by laminating a plurality of transparent plates.

The composite plate of this invention is cheaper, as compared with a unitary glass plate having the identical thickness, and moreover, to the SHF wave used for via-satellite broadcasting, the transmission loss for which the junctions are responsible does not occur; rather, appropriate total thickness, etc., make for improvement in transmission through reflection at the junctions, resulting in excellent electric wave transmission.

The composite plate, simply put, is composed by sticking a transparent resin plate(s) made of an acrylic resin, etc., on one or both of the surfaces of the windowpane which has already been set in a window frame. In this instance, the resin plate may be divided into a plurality of small pieces, so that they may be stuck on the windowpane in juxtaposed arrangement.

When the transparent resin plate is stuck on the surface of a windowpane, the size of the resin plate needs to be at least on the order of 40 cm x 40 cm, taking account of the size of the BS antenna. But such a large transparent resin plate is bulky and not only takes trouble in packing and transporting, but is difficult to stick on the windowpane. In this respect, a plurality of small pieces into which the resin plate is divided are not bulky and do not take trouble in packing, transportation, etc. Moreover, they can not only be readily stuck on the windowpane, but after they have been stuck on the windowpane in juxtaposed arrangement, they give an identical transmission to that of a single resin plate.

(Preferred embodiments)

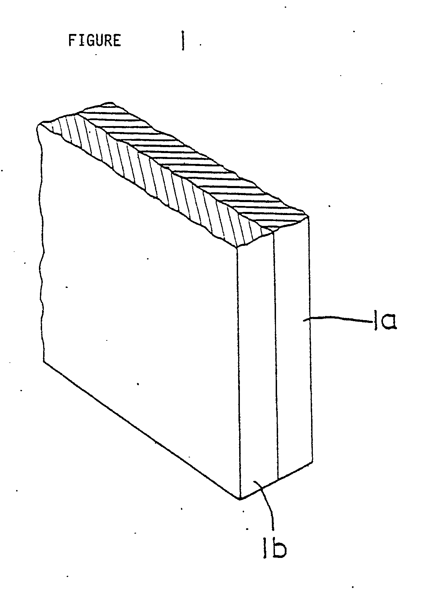

Fig. 1 is a perspective sketch illustrating a composite plate of this invention.

The composite plate of Fig. 1 uses 2 glass plates 1a and 1b. The glass plates 1a and 1b are transparent or translucent and are cemented with a well-known adhesive. The thicknesses of the individual glass plates 1a and 1b are approx. 2-3 mm, with the total thickness adjusted to approx. 5 mm at which their transmission loss to the SHF wave is minimum.

The aforementioned composite plate is used as a windowpane, for permitting reception of via-satellite broadcasting through a window of a room, with a BS antenna installed therein. When the aforementioned composite plate is used as the windowpane, its transmission loss is at the same level as when a unitary glass plate having a thickness of approx. 5 mm is used. As a result, transmission of sufficient electric wave is ensured through this windowpane, so that clear image may be obtained without opening the window.

The 2 glass plates 1a and 1b which compose the aforementioned composite plate may be set in a window frame in the state of being cemented to each other or may be formed by sticking the other glass plate onto one glass plate which has already been set in the window frame. Or 3 or more glass plates may be utilized.

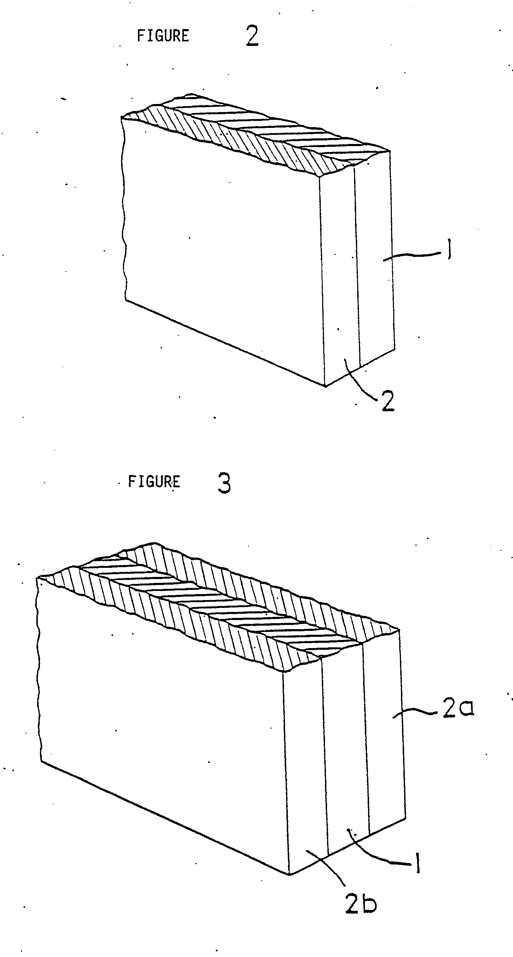

Fig. 2 is a perspective sketch showing another composite plate of this invention.

The composite plate of Fig. 2 is formed as a 2 layer structure with a resin plate 2 made of an acrylic resin similarly as a transparent plate being stuck on one surface of one glass plate 1. The aforementioned composite plate is somewhat inferior to the composite plate of Fig. 1 having 2 glass plates cemented to each other in the transmission to the SHF wave and its total thickness is somewhat larger. When the thickness of the glass plate is 2-3 mm, the transmission to the SHF wave is in fact improved by the cementing of the resin plate thereto and above all, this structure, permitting easy sticking of a resin plate 2 made of an acrylic resin onto a glass plate 1, is particularly advantageous, when utilizing a glass plate which has already been set in a window frame.

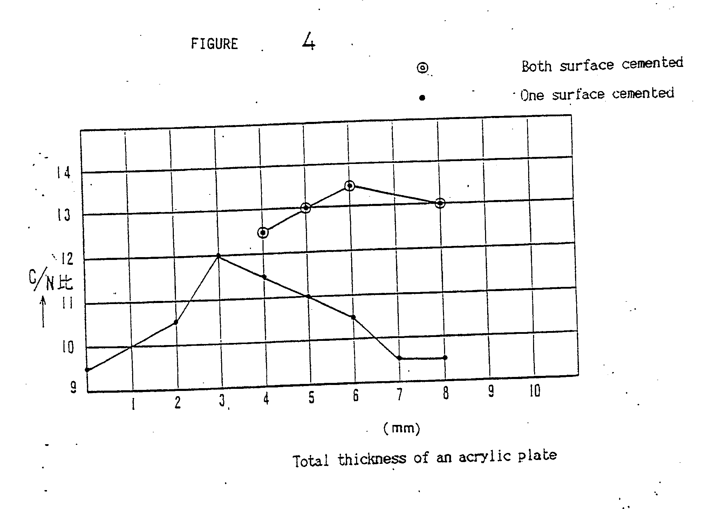

Fig. 3 shows still another composite plate of this invention, said composite plate being a 3 layered structure having 2 resin plates 2a and 2b made of an acrylic resin stuck on both surfaces of one glass plate 1.

The transmission to the SHF wave of the composite plate of Fig. 3 is appreciably better than the composite plate of Fig. 2, giving a characteristic comparable to that of the composite plate of 2 glass plates being cemented to each other. The aforementioned composite plate may be set in a window frame in the state of the component plates being cemented to each other similarly as other window materials or may be formed by making use of a glass palte which has already been set in the window frame, with the resin plates stuck thereon.

Table 1 gives C/N ratios of the composite plates shown in Figs. 1-3, in comparison with those obtained when there exists no shield and when the BS antenna is shielded by a conventional one glass plate. For the acrylic resin plates, 3 types of 2 mm, 3 mm and 4 mm thick plates were used and thicknesses of 5 mm or more are provided by their combinations.

Table 1

| Condition | C/N Ratio |
|---|---|
| No glass nor acrylic plate | 14 |
| 5 mm Glass | 13.5 |
| 3 mm Glass | 9.5 |
| 3 mm Glass + 2 mm Acrylic | 10.5 |
| 3 mm Glass + 3 mm Acrylic | 12.5 |
| 3 mm Glass + 4 mm Acrylic | 11.5 |
| 3 mm Glass + 5 mm Acrylic | 11 |
| 3 mm Glass + 6 mm Acrylic | 10.5 |
| 3 mm Glass + 7 mm Acrylic | 9.5 |
| 3 mm Glass + 8 mm Acrylic | 9.5 |
| 2 mm Acrylic + 3 mm Glass + 2 mm Acrylic | 12.5 |
| 2 mm Acrylic + 3 mm Glass + 3 mm Acrylic | 13 |
| 3 mm Acrylic + 3 mm Glass + 3 mm Acrylic | 13.5 |
| 4 mm Acrylic + 3 mm Glass + 4 mm Acrylic | 13 |

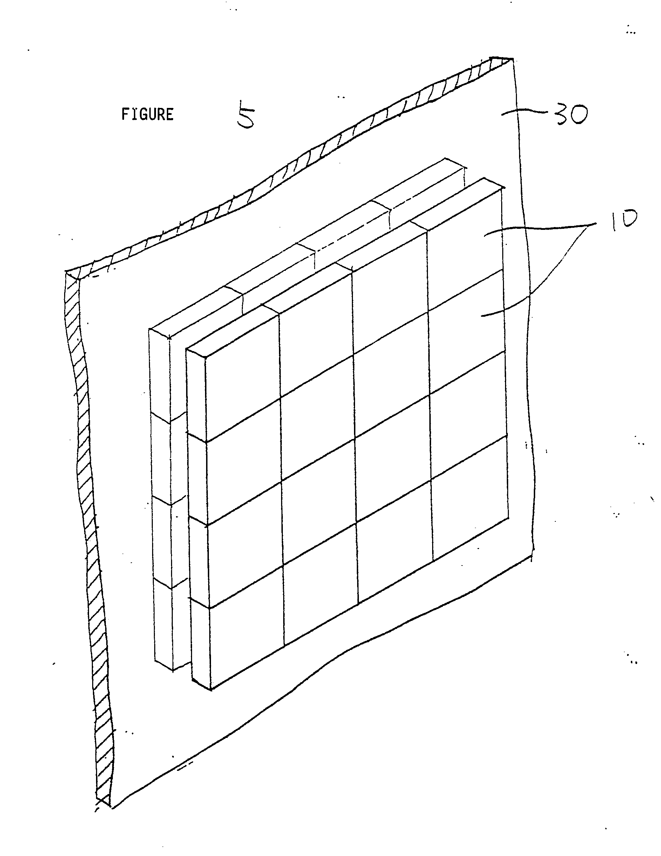

The C/N ratio when the BS antenna is installed quite in the absence of any shield is 14. The C/N ratio when the BS antenna is shielded by a 5 mm glass plate is 13.5. But when the glass plate is 3 mm, the C/N ratio goes down to 9.5. In contrast, when a 3 mm glass plate and a 2 mm glass plate are superposed to have a total thickness of 5 mm, a C/N ratio equal to 13.5 of the 5 mm unitary glass plate is ensured. When an acrylic resin plate is cemented on one surface of a 3 mm glass plate, with the acrylic resin plate having a total thickness of 3 mm, the C/N runs at 12.0 and with its total thickness in a range of 2 mm - 6 mm, C/N ratios of 10.5 or higher are ensured. When acrylic resin plates are cemented on both surfaces of a 3 mm glass plate, with their total thickness 4 mm or larger, C/N ratio (13.5) equal to that of a 5 mm total thick glass plate is ensured. The relationship between the total thickness of the resin plate(s) and the C/N ratio when a resin plate(s) is (are) cemented on a glass plate is depicted in Fig. 4.

As hereabove-described, when a window material with resin plates superposed on both surfaces of a glass plate is used, a C/N ratio tantamount to that obtained with a glass plate of a total thickness of 5 mm may be achieved with a 3 mm universal glass plate. Accordingly, it is quite easily possible to try to greatly improve the C/N ratio using a plate glass which has already been set in a window frame.

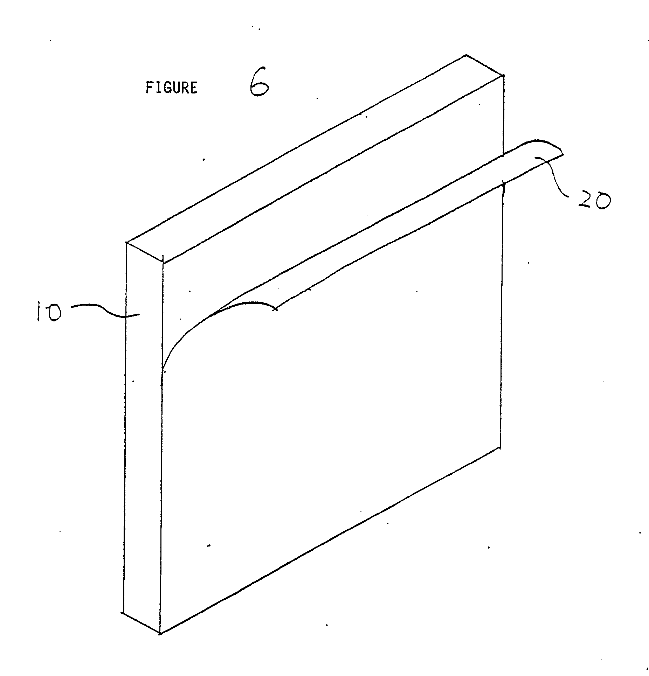

Fig. 5 is a perspective view illustrating such a composite plate of this invention and Fig. 6 is a perspective view of the small piece used in this composite plate.

The composite plate of Fig. 5 has a structure having a plurality of small plate pieces stuck part by part on both sides of a window pane 30 which is set in a window frame. Each resin plate component 10 is made of an acrylic resin, for example, with an adhesive applied on one surface thereof and with a separator 20 stuck on the surface coated with the adhesive before use.

To use these resin plate components 10, separators 20 are released from them, to stick them on respective square shape mutually opposite regions on both surfaces of a windowpane 30, without leaving any gap therebetween. In this way, the resin plate components 10 can be readily stuck on the specified square regions on both surfaces of the windowpane 30, with the transmission loss to the SHF wave in these regions suppressed to the same level achieved with one each of large resin plates stuck on respective surfaces of the windowpane 30.

Before use, the window plate is kept in a compact form by superposing respective resin plate components 10. As a result, the packing and transportation, etc., of the window plate set may be readily performed. When it is sold in a set with a BC antenna, it is practical to house the window plate set in a paper case in which the BC antenna is packed.

Further, even if any resin plate components 10 stuck on the window pane 30 should peel off, this peeling would remain partial, so that the loss concomitant to this peeling could be held at a minimum. Note that in the case of a one piece resin plate which is not divided, the ill-effect of peeling may be suppressed by attaching wires or strings, etc., to hooks, etc., set on the window frame, to bind the window plate thereto.

The number of sheets and the area of the resin plate component 10 are appropriately determined according to the facility in handling of the resin plate components 10 and the area of the region on a windowpane 30 on which the resin plate components 10 are stuck. Normally, at least about 16 sheets of the order of 10 cm square are stuck on one surface of the windowpane. And its thickness is so appropriately determined as to minimize the transmission loss to the SHF wave, after the resin plate components 10 have been stuck on the windowpane, on the basis of the thickness of the windowpane 30, etc., and should desirably be on the order of 3 mm, whether the resin plate components 10 are put on one or both of the surfaces of the windowpane 30, when the thickness of the windowpane 30 is 3 mm.

When the resin plate component 10 has a thickness of 3 mm and a size of 11 cm x 11 cm, a region of 44 cm x 44 cm is covered with the resin plate components 10 by sticking in a square configuration 16 sheets each of 32 sheets of the resin plate components 10 on the opposite regions of both surfaces of the windowpane 30, without leaving a gap.

The C/N ratio to the SHF wave is 14, when there exists no shield; this value drops to 9.5, when its path is shielded by a 3 mm thick windowpane. However, when the thickness of the windowpane is 5 mm, the ratio is 13.5, giving only a small transmission loss to the SHF wave. When 3 mm thick acrylic resin plates are stuck on both surfaces of a 3 mm thick windowpane, the C/N ratio is improved from 9.5 to 13.5 which is tantamount to that of 5 mm thick windowpane and this 13.5 C/N ratio is ensured, even when the acrylic resin plate is divided into 11 cm x 11 cm pieces.

The 3 mm thick resin plate components of 11 cm x 11 cm in divided size have a total thickness of only about 10 cm, even when 32 sheets of them are superposed; thus, they may be compactly housed in a cubic case having a side of about 10 cm, assuring very handy handling.

The small piece is configured to a square in the above-described embodiment, but it is permitted to be rectangular or polygonal, or these peices may be stuck in polygonal configurations other than the square one. Furthermore, a single glass plate may be used in place of the resin plate components 10.

Besides, all composite plates in the above-described embodiments contain a glass plate, but the composite plates may be composed with resin plates only. Further, as the resin plates, acrylic resin plates are used, but other resin plates are also usable. Still further, the glass plates and the resin plates are not necessarily transparent, but they may be translucent or colored.

(Effects of the invention)

The composite plates of this invention give excellent transmission to the SHF wave which is used for via-satellite broadcasting, are low-priced and, further, permit use of already existing windowpanes as they are. Accordingly, they excel in economy and workability, thus contributing to popularization and sales promotion.

With the transparent plate to be stuck on an already existing windowpane divided into small peices, even an unexperienced can readily stick them on the pane and after applying them, notably enhance its transmission to the via-satellite broadcasting wave. Besides, before they are stuck on any windowpane, such small pieces may be compactly housed in a case for facility in packing and transportation, etc.

Brief Description of the Drawings:

Figs. 1-3 and Fig. 5 are perspective views of a composite plate showing an embodiment of this invention;

Fig. 4 is a graph showing the relationship between the total thickness of the resin palte(s) and the C/N ratio, when the resin plate(s) is (are) cemented on the glass plate; and

Fig. 6 is a perspective view of the small peice used to form the composite plate of Fig. 5.

In the drawings: 1, 1a, 1b: Glass plates, 2, 2a, 2b: Resin plates, 10: Resin plate component (small piece), 20: Separator, 30: Windowpane

Table 2

| Condition | C/N Ratio |
|---|---|
| No glass nor acrylic plate | 14 |
| 5 mm Glass | 13.5 |
| 2 mm Glass | 8.5 |
| 2 mm Glass + 2 mm Acrylic | 9.5 |
| 2 mm Glass + 3 mm Acrylic | 11 |
| 2 mm Glass + 4 mm Acrylic | 11 |
| 2 mm Glass + 5 mm Acrylic | 10.5 |
| 2 mm Glass + 6 mm Acrylic | 10 |
| 2 mm Glass + 7 mm Acrylic | 9 |
| 2 mm Glass + 8 mm Acrylic | 9 |
| 2 mm Acrylic + 2 mm Glass + 2 mm Acrylic | 12 |
| 2 mm Acrylic + 2 mm Glass + 3 mm Acrylic | 12.5 |
| 3 mm Acrylic + 2 mm Glass + 3 mm Acrylic | 13.5 |
| 4 mm Acrylic + 2 mm Glass + 4 mm Acrylic | 13 |

Table 3

| Condition | C/N Ratio |
|---|---|
| No glass nor acrylic plate | 14 |
| 5 mm Glass | 13.5 |
| 4 mm Glass | 12.5 |
| 4 mm Glass + 2 mm Acrylic | 11 |
| 4 mm Glass + 3 mm Acrylic | 12.5 |
| 4 mm Glass + 4 mm Acrylic | 12 |
| 4 mm Glass + 5 mm Acrylic | 11.5 |
| 4 mm Glass + 6 mm Acrylic | 11 |
| 4 mm Glass + 7 mm Acrylic | 10 |
| 4 mm Glass + 8 mm Acrylic | 10 |
| 2 mm Acrylic + 4 mm Glass + 2 mm Acrylic | 13 |
| 2 mm Acrylic + 4 mm Glass + 3 mm Acrylic | 13 |
| 3 mm Acrylic + 4 mm Glass + 3 mm Acrylic | 13.5 |
| 4 mm Acrylic + 4 mm Glass + 4 mm Acrylic | 13 |

**Claims**

(1) A composite plate used as a windowpane for permitting indoor reception of via-satellite broadcasting therethrough, characterized in that it is formed by laminating 3 plurality of transparent plates.

(2) The composite plate as claimed in Claim (1), wherein at least one of the plurality of transparent plates is a glass plate.

(3) The composite plate as claimed in Claim (2), wherein the glass plate is a windowpane set in a window frame.

(4) The composite plate as claimed in Claim (2) or (3), wherein a resin plate(s) is (are) cemented on one or both of the surfaces of a glass plate.

(5) The composite plate as claimed in Claim (4), wherein the resin plate is cemented to a part(s) of the surfaces of the glass plate.

(6) The composite plate as claimed in Claim (4) or (5), wherein the resin plate is made of an acrylic resin.

(7) A transparent plate to be stuck on a windowpane, to improve said windowpane's transmission to via-satellite broadcasting electric wave, thereby enabling indoor reception via-satellite broadcasting therethrough.

(8) The transparent plate as claimed in Claim (7), wherein it is divided into a plurality of small pieces, so that they may be stuck on the windowpane in juxtaposed arrangement.

(9) The transparent plate as claimed in Claim (8) which is made of an acrylic resin.

FIGURE $\mathrm{I}$

Ia

Ib

FIGURE 2

1

2

FIGURE 3

2a

2b

1

FIGURE 4

⊚      Both surface cemented

●      One surface cemented

(mm)

Total thickness of an acrylic plate

FIGURE 5

30

10

FIGURE 6